# EUROPEAN PATENT APPLICATION

(11) **EP 4 776 409 A1**
(43) Date of publication of application: **15.07.2026**
(21) Application number: 26150783.4
(22) Date of filing: 08.01.2026
(51) Int. Cl.: H01M 50/244, H01M 50/251

(54) **BATTERY CABINET WITH UNIQUE BATTERY MODULE BRACKET**

(30) Priority: 13.01.2025 US 202563744642 P; 22.10.2025 US 202519365904
(71) Applicant: Vertiv Corporation, Westerville, OH 43082 (US)
(72) Inventor: Rudolph, Thomas M., Westerville, 43082 (US); Meyer, Adam W., Westerville, 43082 (US)
(74) Representative: Cousens, Nico

(57) **Abstract**

A shelf may include a top surface. The shelf may include a set of retain tabs configured to couple a set of battery modules. The shelf may include a set of alignment tabs configured to align one or more battery modules of the set of battery modules as the one or more battery modules are translated from a non-secured position to a secured position.

## Description

The present application claims priority to U.S. Provisional Patent Application Number 63/744,642 filed January 13, 2025.

### TECHNICAL FIELD

The present disclosure relates to battery storage cabinets, and more particularly to mounting systems within battery storage cabinets.

### BACKGROUND

Data centers rely heavily on batteries for providing primary or secondary power to servers within the data centers. These batteries are often securely stored in compartments such as battery cabinets. Due to space limitations within the data centers, there is a need to confine sets of batteries into the smallest spaces possible within the battery cabinetry while still allowing individual batteries to be removed quickly if needed from the set of batteries. However, current battery storage systems are unable to increase the packing efficiency of batteries in cabinets while still allowing easy mounting and dismounting of individual batteries from the cabinets. For example, in systems that include layers, or rows, of battery modules from front to back, technicians may need to access rear or side-panels of the battery cabinet in order to mount and/or remove the batteries from their respective shelf.

Therefore, there is a need for battery cabinets and battery cabinet storage systems that are able to store batteries efficiently while still allowing easy mounting and removal of individual batteries.

### SUMMARY

Accordingly, the present disclosure is directed toward a shelf for securing electronic equipment, such as a battery module, to a shelf, a cabinet that includes the shelf, and a method for securing the battery module to the shelf.

In some embodiments, the techniques described herein relate to a shelf for securing a battery module including: a top surface; a set of retain tabs configured to couple a set of battery modules; and a set of alignment tabs configured to align one or more battery modules of the set of battery modules as the one or more battery modules are translated from a non-secured position to a secured position.

In some embodiments, the techniques described herein relate to a cabinet including: a cabinet frame; and at least one shelf for securing a battery module, the at least one shelf including: a top surface; a set of retain tabs configured to retain a set of battery modules into a first row; and a set of alignment tabs configured to align one or more battery modules of the set of battery modules as the one or more battery modules are translated from a non-secured position to a secured position.

In some embodiments, the techniques described herein relate to a method for securing a battery module to a shelf, including: positioning a battery module upon the shelf at a nonsecure position, wherein the shelf includes a set of alignment tabs and a set of retain tabs; guiding the battery module between a pair of alignment tabs of the set of alignment tabs; and translating the battery module until at least one tab receiving element of the battery module contacts at least one retain tab of a set of retain tabs.

It is to be understood that both the foregoing general description and the following detailed description are exemplary and explanatory only and are not necessarily restrictive of the present disclosure. The accompanying drawings, which are incorporated in and constitute a part of the specification, illustrate subject matter of the disclosure. Together, the descriptions and the drawings serve to explain the principles of the disclosure.

### BRIEF DESCRIPTION OF DRAWINGS

The numerous advantages of the disclosure may be better understood by those skilled in the art by reference to the accompanying figures.
FIG. 1 illustrates a top perspective view of a shelf for storing electronic equipment, in accordance with one or more embodiments of the disclosure.
FIG. 2A illustrates a close-up perspective view of two retain tabs of the shelf, in accordance with one or more embodiments of the disclosure.
FIG. 2B illustrates a close-up perspective view of a pair of alignment tabs of the shelf, in accordance with one or more embodiments of the disclosure.
FIG. 3 illustrates a reversed top perspective view of a pair of battery modules disposed upon and coupled to the shelf, in accordance with one or more embodiments of the disclosure.
FIG. 4 illustrates a cabinet that includes a plurality of shelves, with each shelf attached to a cabinet frame and securing one or more battery modules, in accordance with one or more embodiments of the disclosure.
FIG. 5 illustrates a process flow diagram depicting a method for securing a battery module to a shelf, in accordance with one or more embodiments of the disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present), and B is false (or not present), A is false (or not present) and B is true (or present), and both A and B are true (or present).

In addition, the use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "embodiments" means that a particular element, feature, structure, or characteristic described in connection with the embodiment is included in at least one embodiment disclosed herein. The appearances of the phrase "in embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Disclosed is a shelf, a cabinet containing one or more shelves, and a method for securing electronic equipment, such as batteries or battery modules. The shelf includes a top surface that includes a set of retain tabs configured to couple to one or more battery modules, and a set of alignment tabs configured to assist an operator in aligning the battery modules so that the battery can be easily and accurately pushed towards the retain tabs, securing the battery module to the shelf. The shelf allows blind-mate or blind-coupling (e.g., coupling without the need to see the physical couplers) of the battery module to the shelf, easing installation for the operator. Because the retain tabs and the alignment tabs are formed from the shelf material and require no extra fasteners, the shelf reduces the number of parts required to install during assembly of the shelves/battery cabinet and the securing of the battery modules.

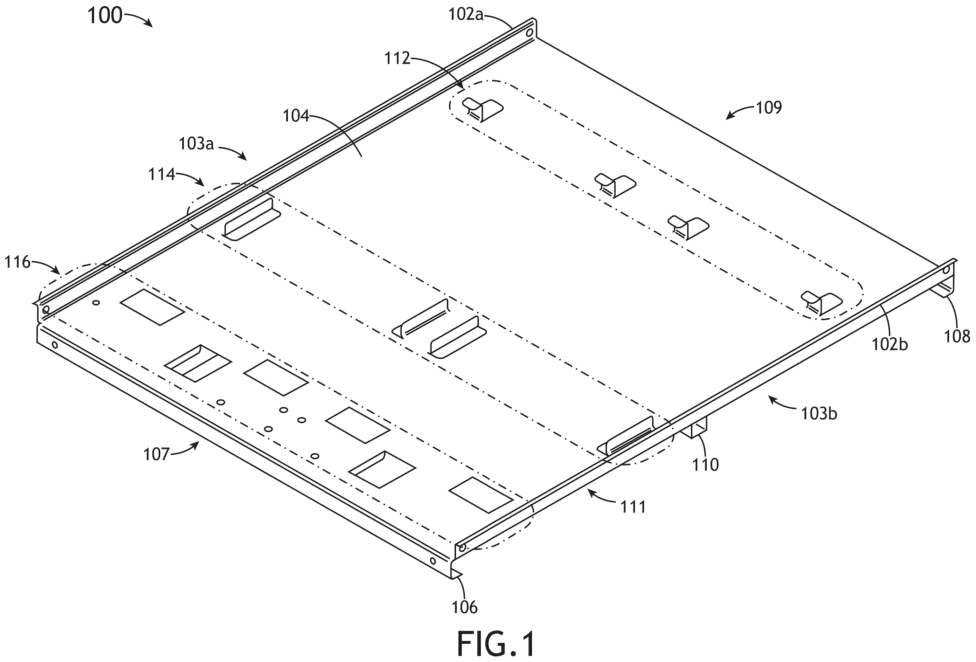

FIG. 1 illustrates a top perspective view of a shelf 100 for storing electronic equipment, in accordance with one or more embodiments of the disclosure. The shelf may store any type of equipment including, but not limited to, batteries, battery modules, and/or computers (e.g., servers). For example, the shelf 100 may be configured to secure two battery modules that store power for powering one or more computers. The shelf may be configured to store any number of battery modules including, but not limited to one, two, three, four, five, six, or seven or more battery modules. The shelf 100 may be constructed of any type of material, including metal. For example, the shelf 100 may include aluminum or iron.

In embodiments, the shelf 100 includes side ribs 102a, 102b (e.g., disposed on opposing sides 103a, 103b) of the shelf 100, configured to be couplable to a cabinet. For example, the side ribs 102a, 102b, may be couplable to one or more support structures of the cabinet (e.g., the frame or frame elements) via fasteners, and/or may slide into a groove within the cabinet. The side ribs 102a, 102b may also provide structural support for the shelf 100 and keep a top surface 104 (e.g., the top surface facing upwards relative to the shelf 100) relatively flat and uniform while resisting the weight of the battery modules.

In embodiments, the shelf 100 includes a front rib 106 and a back rib 108 (e.g., located on a front side 107 and a back side 109 of the shelf, respectively) configured to be couplable to a support structure of a cabinet. The front rib 106 and the back rib 108 may be fastenable to the cabinet via fasteners. The front rib 106 and the back rib 108 may also provide structural support for the shelf 100.

In embodiments, the shelf 100 includes one or more support ribs 110 configured to add support to the shelf. For example, one or more support ribs 110 may be positioned between, and may be positioned substantially parallel to, the side ribs 102a, 102b, or substantially parallel to the front rib 106. In another example, the one or more support ribs 110 are not positioned nonparallel to the side ribs 102a, 102b or front rib 106. The one or more support ribs may be positioned against a bottom surface 111 (e.g., the bottom surface 111 opposite the top surface 104 and facing downwards) of the shelf 100.

In embodiments, the shelf 100 includes a set of retain tabs 112 configured to couple to one or more battery modules. For example, the set of retain tabs 112 may be configured to blind-mate or blindly couple to the one or more battery modules. For instance, the set of retain tabs 112 may be configured to receive a battery module that is slid across the top surface 104 of the shelf 100. When the battery module contacts the set retain tabs 112, one or more of the retain tabs interact with one or more tab receiving elements (e.g., notches) on the battery module, coupling the one or more retain tabs to the battery module. The interaction between the retain tabs 112 to the tab receiving elements may include an interference fit (e.g., a press fit, or friction fit), a transition fit, or an interference fit. For example, the interaction between the retain tabs 112 and the tab receiving elements of the battery module may include a "snap" interference fit. The shelf 100 may include any number of retain tabs 112 for coupling a battery module.

In embodiments, the shelf 100 includes a set of alignment tabs 114 configured to align one or more battery modules. For example, the set of alignment tabs 114 may be configured to align the one or more battery modules from a non-secured position (e.g., a position at or near the front rib 106 to a secured position where the battery module couples to the set of retain tabs 112. The set of alignment tabs 114 may include alignment tabs 114 of any shape or size. For example, the alignment tabs 114 may include a simple flap of material that arises from the top surface 104. The shelf 100 may include any number of alignment tabs 114 for coupling a battery module.

In embodiments, the shelf 100 includes a set of punchouts 116 within the top surface 104. The punchouts 116 may be used for a variety of functions. For example, one or more punchouts may include small holes that are used in combination with fasteners (e.g., screws) to attach one or more components of the electronic equipment or cabinet to the shelf. For instance, the punchouts 116 may include screw holes that can be used to attach braces and/or busbars that are themselves couplable to the battery module. In another example, one or more punchouts 116 may include larger holes (e.g., circles or rectangles) that function to allow wiring to be strung between shelves 100. For instance, the one or more punchouts 116 may be used to string wire through for connecting one or more battery modules in series or parallel connections.

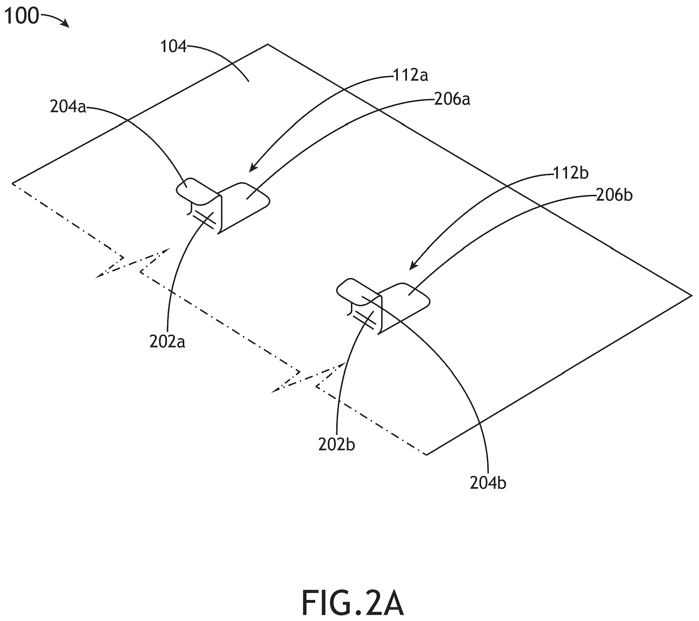

FIG. 2A illustrates a close-up perspective view of two retain tabs 112a, 112b of the shelf 100, in accordance with one or more embodiments of the disclosure. The retain tabs 112a, 112b may include vertical members 202a, 202b coupled to the top surface 104 and on a first end, and horizontal members 204a, 204b coupled to the vertical members of a second end. The L-shape of the retain tab 112a, 112b may provide the basis for the interaction and coupling between the 112a, 112b and the battery module.

In embodiments, the retain tabs 112a, 112b are punched (e.g., stamped) out from the top surface (e.g., leaving a hole 206a, 206b). The punched and shaped retain tabs 112a, 112b are well adhered to the top surface 104 and provide considerable strength for coupling the battery module.

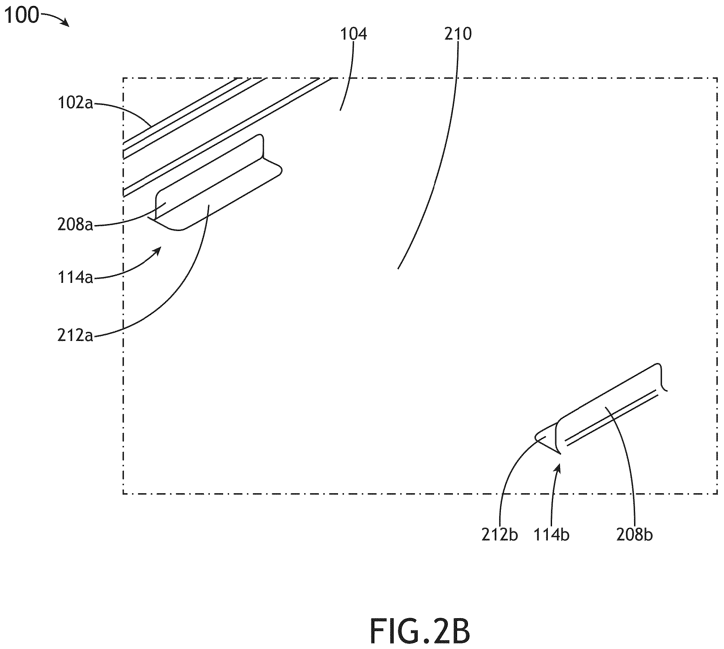

FIG. 2B illustrates a close-up perspective view of a pair of alignment tabs 114a, 114b of the shelf 100, in accordance with one or more embodiments of the disclosure. The pair of alignment tabs 114a, 114b each may include a vertical member 208a, 208b coupled to the top surface 104 and on a first end. The positioning of the pair of alignment tabs 114a, 114b provide a valley 210 for the battery module to be guided between as the battery module is translated (e.g., slid) from the nonsecure position to the secure position.

In embodiments, the pair of alignment tabs 114a, 114b are punched (e.g., stamped) out from the top surface (e.g., leaving holes 212a, 212b). The punched-out alignment tabs 114a, 114b are well adhered to the top surface 104 and provide considerable strength for guiding and aligning the battery module.

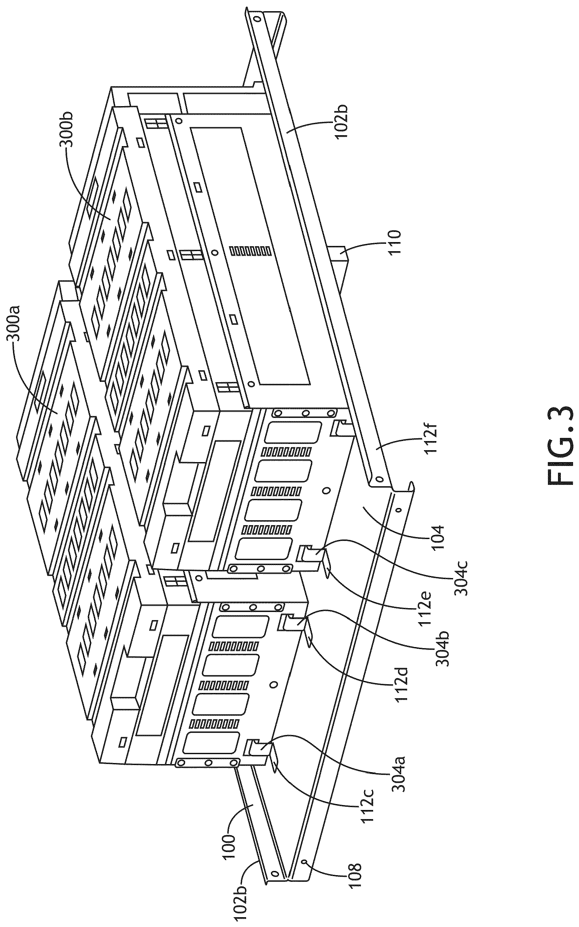

FIG. 3 illustrates a reversed top perspective view of a pair of battery modules 300a, 300b disposed upon and coupled to the shelf 100, in accordance with one or more embodiments of the disclosure. Four retain tabs 112c, 112d, 112e, 112f couple the battery modules to the top surface 104 of the shelf 100 (e.g., by interacting with tab receiving elements 304a, 304b, 304c, 304d). The battery modules 300a, 300b may be further coupled to the top surface 104 of the shelf 100 via a brace 302 that coupled to both the shelf 100 and one or more of the battery modules 300a, 300b. As shown in FIG. 3, the arrangement of the retain tabs 112c, 112d, 112e, 112f and the alignment tabs 114 allow two battery modules 300a, 300b to be mounted side-by-side on the shelf 100.

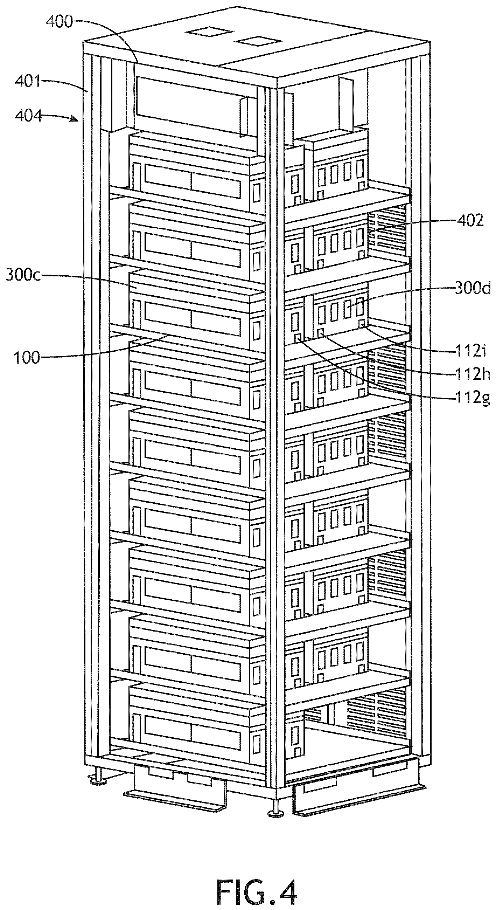

FIG. 4 illustrates a cabinet 400 that includes a plurality of shelves 100, with each shelf 100 attached to a cabinet frame 401 and securing one or more battery modules 300c, 300d, in accordance with one or more embodiments of the disclosure. The rear and side panels of the cabinet 400 have been removed to reveal the shelves 100 and battery modules 300. The cabinet 400 may include or be couplable to any number of shelves including, but not limited to, one shelf, two or more shelves 100, four or more shelves 100, eight or more shelves 100, or 16 or more shelves 100. For example, the cabinet may include nine shelves 100. The shelf 100 may be attached the frame 401 (e.g., posts of the frame 401) via screws or other fasteners.

The rear side 402 of the cabinet 400 shows retain tabs 112g, 112h, 112i that couple the battery modules 300c, 300d to the shelf 100. In this manner, a technician, accessing the front side 404 of the cabinet 400 may place a battery module 300d on a front part of the shelf 100 near the front rib 106 and between a pair of alignment tabs 114a, 114b (a nonsecure position), and slide (e.g., translate) the battery module 300d until the battery module interacts and couples with the retain tabs 112h, 112i, without the need to access the rear panel.

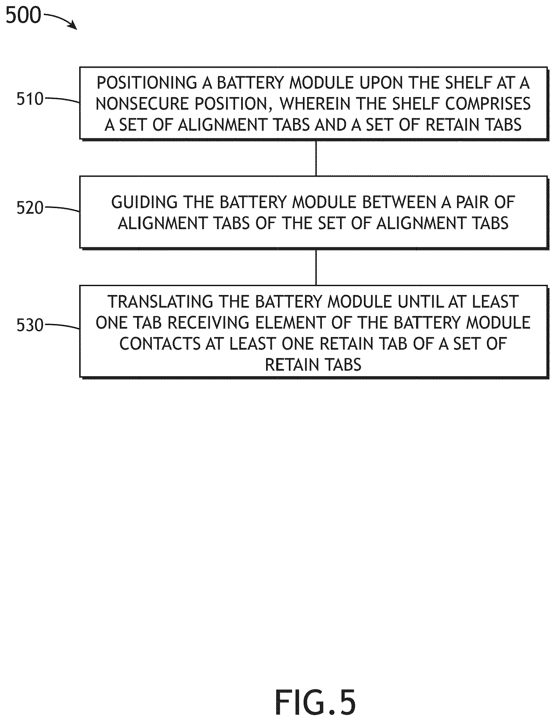

FIG. 5 illustrates a process flow diagram depicting a method 500 for securing a battery module 300 to a shelf 100, in accordance with one or more embodiments of the disclosure. The method 500 may be used with the shelf 100 and/or cabinet 400 as described herein.

In embodiments, the method 500 includes a step 510 of positioning a battery module 300 upon the shelf 100 at a nonsecure position (e.g., closer to the front rib 106 and/or towards the front side 404 of the cabinet) wherein the shelf 100 comprises a set of alignment tabs 114 and a set of retain tabs 112.

In embodiments, the method 500 includes a step 520 of guiding the battery module 300 between a pair of alignment tabs 114a, 114b of the set of alignment tabs 114. In embodiments, the method 500 includes a step 520 of translating the battery module until at least one tab receiving element 304 of the battery module 300 contacts at least one retain tab 112 of a set of retain tabs 112. For example, the technician may translate the battery module 300 until the technician senses a resistance by the retain tab 112, or an audible noise or haptic event (e.g., a click) that indicates that the batter module 300 is coupled to the shelf 100.

Also disclosed are the following numbered items:
1. A cabinet comprising:
   a cabinet frame; and
   at least one shelf configured to secure a battery module, the at least one shelf comprising:
      a top surface;
      a set of retain tabs configured to couple a set of battery modules; and
      a set of alignment tabs configured to align one or more battery modules of the set of battery modules as the one or more battery modules are translated from a non-secured position to a secured position.
2. The cabinet of item 1, wherein one or more retain tabs of the set of retain tabs comprises:
   a vertical member, coupled to the top surface on a first end; and
   a horizontal member coupled to the vertical member on a second end.
3. The cabinet of item 2, wherein the one or more retain tabs of the set of retain tabs are punched out from the top surface of the shelf.
4. The cabinet of item 1, wherein one or more alignment tabs of the set of alignment tabs comprises a vertical member coupled to the top surface on a first end.
5. The cabinet of item 4, wherein the one or more alignment tabs of the set of alignment tabs are punched out from the top surface.
6. The cabinet of item 1, wherein the set of retain tabs is configured to blind-couple to the set of battery modules.
7. The cabinet of item 1, the shelf further comprising:
   a front rib;
   a back rib disposed on a front side and a back side of the shelf, wherein the front rib and the back rib are configured to be couplable to support structure of the cabinet;
   a support rib disposed on a bottom surface of the shelf, wherein the support rib is positioned between, and substantially parallel to, the front rib and back rib; and
   side ribs disposed on opposing sides of the shelf, wherein the side ribs are configured to be couplable to support structures of the cabinet, wherein one or more retain tabs of the set of retain tabs comprises:
      a vertical member, coupled to the top surface on a first end; and
      a horizontal member coupled to the vertical member on a second end, wherein the one or more retain tabs of the set of retain tabs are punched out from the top surface of the shelf, wherein one or more alignment tabs of the set of alignment tabs comprises a vertical member coupled to the top surface on a first end, wherein the one or more alignment tabs of the set of alignment tabs are punched out from the top surface, wherein the set of retain tabs are configured to blind-couple to the set of battery modules.

The herein described subject matter sometimes illustrates different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.).

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the scope of the subject matter described herein. Furthermore, it is to be understood that the invention is defined by the appended claims.

## Claims

1. A shelf (100) for securing a battery module to a cabinet comprising:
a top surface (104);
a set of retain tabs (112) configured to couple a set of battery modules; and
a set of alignment tabs (114) configured to align one or more battery modules of the set of battery modules as the one or more battery modules are translated from a non-secured position to a secured position.

2. The shelf of claim 1, wherein one or more retain tabs of the set of retain tabs comprises:
a vertical member (202a, 202b), coupled to the top surface on a first end; and
a horizontal member (204a, 204b) coupled to the vertical member on a second end.

3. The shelf of claim 2, wherein the one or more retain tabs of the set of retain tabs are punched out from the top surface of the shelf.

4. The shelf of any preceding claim, wherein one or more alignment tabs of the set of alignment tabs comprises a vertical member (208a, 208b) coupled to the top surface on a first end.

5. The shelf of claim 4, wherein the one or more alignment tabs of the set of alignment tabs are punched out from the top surface.

6. The shelf of any preceding claim, wherein the set of retain tabs is configured to blind-couple to the set of battery modules.

7. The shelf of any preceding claim, further comprising two side ribs (102a, 102b) disposed on opposing sides (103a, 103b) of the shelf, wherein the two side ribs are configured to be couplable to support structures of the cabinet.

8. The shelf of any preceding claim, further comprising a front rib (106) and a back rib (108) disposed on a front side (107) and a back side (109) of the shelf, wherein the front rib and the back rib are configured to be couplable to support structures of the cabinet.

9. The shelf of claim 8, further comprising a support rib (110) disposed on a bottom surface (111) of the shelf, wherein the support rib is positioned between the front rib and back rib.

10. The shelf of any preceding claim, further comprising:
a front rib;
a back rib disposed on a front side and a back side of the shelf, wherein the front rib and the back rib are configured to be couplable to support structure of the cabinet;
a support rib disposed on a bottom surface of the shelf, wherein the support rib is positioned between, and substantially parallel to, the front rib and back rib; and
side ribs disposed on opposing sides of the shelf, wherein the side ribs are configured to be couplable to support structures of the cabinet, wherein one or more retain tabs of the set of retain tabs comprises:
a vertical member, coupled to the top surface on a first end; and
a horizontal member coupled to the vertical member on a second end, wherein the one or more retain tabs of the set of retain tabs are punched out from the top surface of the shelf, wherein one or more alignment tabs of the set of alignment tabs comprises a vertical member coupled to the top surface on a first end, wherein the one or more alignment tabs of the set of alignment tabs are punched out from the top surface, wherein the set of retain tabs are configured to blind-couple to the set of battery modules.

11. A cabinet comprising:
a cabinet frame; and
at least one shelf according to any preceding claim configured to secure a battery module, the at least one shelf comprising:
a top surface;
a set of retain tabs configured to couple a set of battery modules; and
a set of alignment tabs configured to align one or more battery modules of the set of battery modules as the one or more battery modules are translated from a non-secured position to a secured position.

12. A method (500) for securing a battery module to a shelf, comprising:
positioning (510) a battery module upon the shelf at a nonsecure position, wherein the shelf comprises:
a top surface;
a set of retain tabs configured to couple a set of battery modules; and
a set of alignment tabs configured to align one or more battery modules of the set of battery modules as the one or more battery modules are translated from a non-secured position to a secured position;
guiding (520) the battery module between a pair of alignment tabs of the set of alignment tabs; and
translating (530) the battery module until at least one tab receiving element of the battery module contacts at least one retain tab of a set of retain tabs.

13. The method of claim 12, wherein the set of retain tabs is configured to blind-couple to the set of battery modules.

14. The method of claim 12 or 13, the shelf further comprising:
a front rib;
a back rib disposed on a front side and a back side of the shelf, wherein the front rib and the back rib are configured to be couplable to support structures of a cabinet;
a support rib disposed on a bottom surface of the shelf, wherein the support rib is positioned between, and substantially parallel to, the front rib and back rib; and
side ribs disposed on opposing sides of the shelf, wherein the side ribs are configured to be couplable to support structures of the cabinet, wherein one or more retain tabs of the set of retain tabs comprises:
a vertical member, coupled to the top surface on a first end; and
a horizontal member coupled to the vertical member on a second end, wherein the one or more retain tabs of the set of retain tabs are punched out from the top surface of the shelf, wherein one or more alignment tabs of the set of alignment tabs comprises a vertical member coupled to the top surface on a first end, wherein the one or more alignment tabs of the set of alignment tabs are punched out from the top surface, wherein the set of retain tabs are configured to blind-couple to the set of battery modules.
